(19) Europäisches Patentamt
European Patent Office
Office européen des brevets

(11) **EP 2 327 191 B1**

(12) **FASCICULE DE BREVET EUROPEEN**

(45) Date de publication et mention de la délivrance du brevet:
**28.12.2011 Bulletin 2011/52**

(21) Numéro de dépôt: **09812716.0**

(22) Date de dépôt: **14.09.2009**

(51) Int Cl.:
**H04L 27/26** (2006.01)     **H04L 25/02** (2006.01)

(86) Numéro de dépôt international:
**PCT/EP2009/061874**

(87) Numéro de publication internationale:
**WO 2010/029173 (18.03.2010 Gazette 2010/11)**

(54) **Méthode d'estimation aveugle de paramètres de signal OFDM par filtrage adapté**

Verfahren zur Blindmessung von OFDM-Signalparametern durch adaptierte Filterung

Method for the blind estimation of OFDM signal parameters by adapted filtering

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.09.2008 FR 0856197**

(43) Date de publication de la demande:
**01.06.2011 Bulletin 2011/22**

(73) Titulaire: **Commissariat à l'Énergie Atomique et aux Énergies Alternatives
75015 Paris (FR)**

(72) Inventeurs:
 • **BOUZEGZI, Abdelaziz
 F-69003 LYON, (FR)**
 • **JALLON, Pierre
 F-38100 Grenoble (FR)**
 • **CIBLAT, Philippe
 F-75020 Paris (FR)**

(74) Mandataire: **Ilgart, Jean-Christophe et al
BREVALEX
95 rue d'Amsterdam
75378 Paris Cedex 8 (FR)**

(56) Documents cités:
**US-A1- 2005 047 515**

 • **PENG LIU ET AL: "A blind time-parameters estimation scheme for OFDM in multi-path channel" WIRELESS COMMUNICATIONS, NETWORKING AND MOBILE COMPUTING, 2005. PROCEE DINGS. 2005 INTERNATIONAL CONFERENCE ON WUHAN, CHINA SEPT. 23-26, 2005, PISCATAWAY, NJ, USA,IEEE, vol. 1, 23 septembre 2005 (2005-09-23), pages 222-227, XP010856125 ISBN: 978-0-7803-9335-6**

**Description**

**DOMAINE TECHNIQUE**

La présente invention concerne une méthode d'estimation aveugle de paramètres de signal OFDM (*Orthogonal Frequency Division Multiplex*).

**ÉTAT DE LA TECHNIQUE ANTÉRIEURE**

La modulation OFDM est bien connue de l'état de la technique et est employée dans de nombreux systèmes de télécommunication tels que DVB-T, ADSL, Wi-Fi (IEEE 802 a/g), WiMax (IEEE 802.16). Elle présente l'avantage d'une bonne efficacité spectrale et d'une bonne protection contre les évanouissements sélectifs en fréquence.
On rappelle que dans un système OFDM, les symboles d'information à transmettre sont groupés par blocs de *N* symboles, où *N* est généralement une puissance de 2, les symboles OFDM étant obtenus en effectuant une IFFT (*Inverse Fast Fourier Transform*) sur lesdits blocs de symboles d'information. Généralement, un préfixe cyclique est rajouté au début de chaque symbole OFDM pour absorber l'interférence inter-symbole ou ISI et faciliter l'égalisation à la réception. Le signal OFDM constitué par ces symboles OFDM peut être éventuellement ensuite translaté en fréquence.
De manière générale, le signal émis par un système OFDM peut être représenté en bande de base par :

$$s_a(t) = \frac{\sqrt{E}}{N} \sum_k g\left(t - k(N+D)T_c\right) . \sum_{n=0}^{N-1} a_{k,n} e^{-2i\pi \frac{n}{NT_c}\left(t - DT_c - k(N+D)T_c\right)} \qquad (1)$$

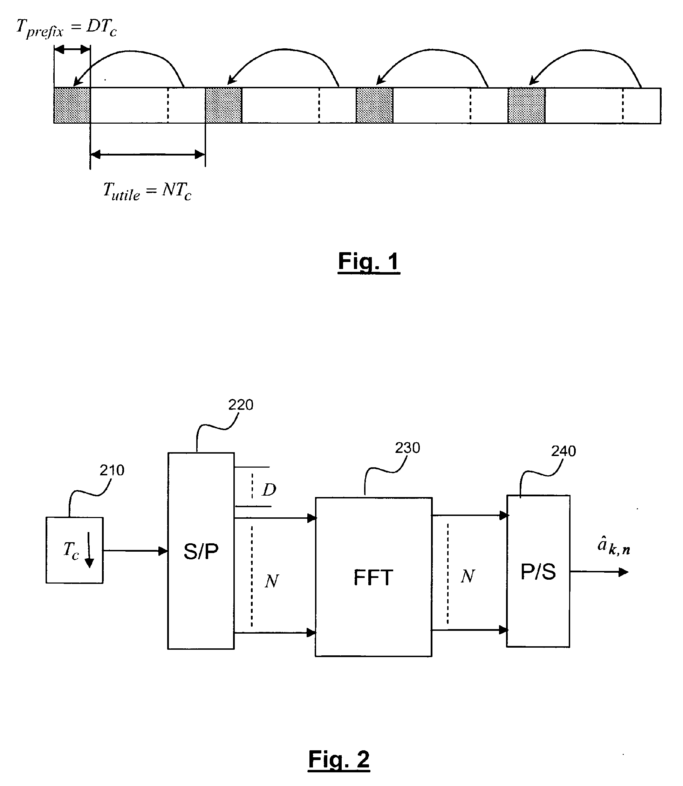

où *E* est la puissance du signal, *N* est le nombre de porteuses du multiplex OFDM, $a_{k,n}$ sont les symboles d'information relatifs au bloc *k*, appartenant à un alphabet de modulation *M*-aire, typiquement BPSK, QPSK ou QAM, $1/T_c$ est le débit des symboles d'information où $T_c$ est le temps « bribe » ou « chip », *D* est la taille du préfixe cyclique exprimée en nombre de bribes , *g(t)* est une impulsion de mise en forme des symboles OFDM ayant un support temporel [0,(*N+D*) $T_c$] destiné à apodiser le spectre du signal.
On a représenté de manière schématique un signal OFDM en Fig. 1. Il est constitué d'une séquence de symboles OFDM, chaque symbole présentant une durée totale (*N+D*)$T_c$ dont une durée utile $NT_c$ et un intervalle de garde de durée $T_{prefix} = DT_c$, dans lequel se trouve le préfixe cyclique. On rappelle que, de manière classique, le préfixe cyclique est une copie de la fin du symbole OFDM à l'intérieur de l'intervalle de garde. Dans certains systèmes OFDM, les préfixes cycliques sont simplement omis, autrement dit les parties utiles des symboles sont séparées par des intervalles de garde « vides ». Cette technique de transmission permet aussi d'éliminer l'interférence intersymbole mais ne rend pas aisée l'égalisation du signal.
Après propagation dans le canal de transmission, le signal OFDM reçu par le récepteur peut s'exprimer par :

$$y(t) = h \otimes s_a(t) + b(t) \qquad (2)$$

où $h \otimes s_a$ est la convolution entre le signal OFDM émis, $s_a(t)$ est la réponse impulsionnelle du canal de transmission *h*(t), et *b(t)* est une fonction aléatoire décrivant le bruit. On supposera que la longueur de la réponse impulsionnelle est inférieure à la durée de l'intervalle de garde, de sorte que l'on pourra faire abstraction de l'interférence intersymbole (ISI).
La Fig. 2 représente de manière schématique la structure d'un récepteur OFDM.
Après éventuelle démodulation en bande de base, le signal reçu est échantillonné en 210 à la fréquence chip, puis les échantillons sont soumis à une conversion série/parallèle en 220 pour former des blocs de *N + D* échantillons. Les *D* premiers échantillons correspondant à l'intervalle de garde sont rejetés et le bloc des *N* échantillons restants correspondant à la partie utile du symbole OFDM est soumis à une FFT en 230. Les symboles démodulés obtenus sont ensuite soumis à une conversion série en 240.
En définitive, en supposant que le récepteur est bien synchronisé en temps et en fréquence, les symboles démodulés peuvent s'exprimer par :

$$\hat{a}_{k,n} = h_n a_{k,n} + b_{k,n} \qquad\qquad (3)$$

où $h_n$ est un coefficient complexe qui dépend de la réponse impulsionnelle du canal de transmission, et $b_{k,n}$ est une variable aléatoire représentant un échantillon de bruit.

Le bon fonctionnement de ce récepteur nécessite une synchronisation précise en temps et en fréquence. En effet, on comprend qu'une mauvaise synchronisation en temps entraînera un glissement temporel progressif de la fenêtre de troncation et une mauvaise synchronisation en fréquence, une rotation en phase des échantillons, pouvant être représentée par un facteur multiplicatif $e^{2i\pi\Delta f n Tc}$ où $\Delta f$ est l'offset de fréquence entre la fréquence de démodulation du récepteur et la fréquence porteuse du multiplex OFDM.

La synchronisation temporelle et fréquentielle du récepteur est généralement réalisée grâce à l'acquisition d'une séquence d'apprentissage.

Le fonctionnement de ce détecteur suppose bien entendu que l'on connaisse les paramètres du signal OFDM transmis (autrement dit les paramètres des symboles OFDM). Par paramètres du signal OFDM on entend ici le nombre $N$ de sous-porteuses, la durée utile $NT_c$ d'un symbole ou de manière équivalente l'espacement fréquentiel $1/NT_c$ entre sous-porteuses, la durée de l'intervalle de garde $DT_c$ et/ou la période de répétition $(N+D)T_c$ de ces symboles.

Bien souvent, le récepteur ne connaît pas a *priori* les paramètres du signal OFDM et l'on doit procéder à leur estimation à l'aveugle, préalablement à toute démodulation.

Plusieurs méthodes ont été proposées à cet effet. Elles exploitent la présence du préfixe cyclique dans le signal OFDM et les propriétés de cyclostationnarité qui en découlent. Les estimateurs des paramètres sont basés sur la fonction d'autocorrélation du signal OFDM. On trouvera un exemple d'une telle méthode d'estimation dans l'article de P. Liu et al. intitulé « A blind time-parameters estimation scheme for OFDM in multipath channel », publié dans Proc. 2005 Int'l Conference on Information, Communications and Signal Processing, vol. 1, pp. 242-247, 23-26 Sept. 2005.

Ces méthodes d'estimation présentent cependant l'inconvénient de nécessiter d'acquérir un nombre élevé de symboles OFDM pour effectuer le calcul de la fonction d'autocorrélation. En outre, ces méthodes ne fonctionnent pas dans le cas, évoqué plus haut, où le signal OFDM est dépourvu de préfixes cycliques. Elles ne fonctionnent pas bien voire pas du tout lorsque le rapport entre la durée du préfixe et celle du symbole OFDM, $D/(D+N)$, est faible. En effet, dans ce cas le pic secondaire de la fonction d'autocorrélation, dû à la cyclostationnarité du signal, s'estompe voire disparaît dans le bruit. Il est alors impossible de déterminer précisément l'écart entre le pic principal et le pic secondaire qui permet d'estimer le paramètre $NT_c$.

Le but de la présente invention est donc de proposer une méthode d'estimation à l'aveugle de paramètres d'un signal OFDM qui ne présente pas les inconvénients précités.

Un but subsidiaire de la présente invention est de permettre une synchronisation temporelle et fréquentielle du récepteur OFDM qui soit rapide et ne nécessite pas de séquence d'apprentissage.

**EXPOSÉ DE L'INVENTION**

La présente invention est définie par une méthode d'estimation aveugle d'au moins un paramètre d'un signal OFDM constitué d'une séquence de symboles OFDM, le signal OFDM étant démodulé en bande de base puis échantillonné pendant une période d'observation.

Selon un premier mode de réalisation, on forme un vecteur **y** des échantillons ainsi obtenus, et pour une pluralité de valeurs possibles dudit paramètre, on construit une matrice $\mathbf{H}_{\bar{\theta}}$ représentative d'une modulation OFDM utilisée pour générer ledit signal, ladite matrice dépendant dudit paramètre, et l'on calcule la valeur d'une fonction objectif

$$J(\bar{\boldsymbol{\theta}}) = \frac{\left\|\mathbf{H}_{\bar{\boldsymbol{\theta}}}^{\mathbf{H}}\mathbf{y}\right\|^2}{\left\|\mathbf{H}_{\bar{\boldsymbol{\theta}}}\mathbf{H}_{\bar{\boldsymbol{\theta}}}^{\mathbf{H}}\right\|_F}$$

où $\|\cdot\|$ est la norme euclidienne, $\|\cdot\|_F$ est la norme de Frobenius, et enfin on sélectionne comme estimation dudit paramètre ladite valeur possible de paramètre qui réalise le maximum de la fonction objectif.

Ledit paramètre est par exemple caractéristique de la longueur utile desdits symboles OFDM.

Selon un autre exemple, la méthode précitée estime conjointement un ensemble de paramètres du signal OFDM, le maximum de la fonction objectif étant recherché pour un ensemble de valeurs possibles respectives de ces paramètres, l'ensemble desdites valeurs possibles réalisant le maximum de la fonction objectif donnant les valeurs estimées respectives de ces paramètres.

Ledit ensemble de paramètres peut être constitué par le nombre de sous-porteuses du multiplex OFDM, la longueur utile, et la durée de préfixe desdits symboles OFDM.

Selon un second mode de réalisation, pour une pluralité de valeurs possibles dudit paramètre, l'on construit une matrice représentative d'une modulation OFDM utilisée pour générer ledit signal, ladite matrice dépendant dudit paramètre et, pour chaque valeur possible du paramètre, on teste une pluralité de valeurs possibles d'un offset temporel entre le début de la période d'observation et le début d'un symbole OFDM, en éliminant pour chaque valeur possible dudit offset temporel un nombre correspondant de premières lignes de ladite matrice et le même nombre de premiers éléments dudit vecteur pour former une matrice tronquée $\mathbf{H}_{\tilde{\theta}}$ et un vecteur tronqué $\mathbf{y}$, on calcule la valeur d'une fonction

objectif $\quad J\left(\tilde{\boldsymbol{\theta}}\right)=\dfrac{\left\|\mathbf{H}_{\tilde{\theta}}^{\mathbf{H}}\mathbf{y}\right\|^{2}}{\left\|\mathbf{H}_{\tilde{\theta}}\mathbf{H}_{\tilde{\theta}}^{\mathbf{H}}\right\|_{F}}\quad$ où $\|\cdot\|$ est la norme euclidienne, $\|\cdot\|_{F}$ est la norme de Frobenius, et l'on sélectionne comme estimation dudit paramètre et comme estimation de l'offset temporel, le couple des valeurs possibles du paramètre et de l'offset qui réalise le maximum de la fonction objectif.

Par exemple, ledit paramètre est caractéristique de la longueur utile desdits symboles OFDM.

Selon un autre exemple, la méthode d'estimation estime conjointement un ensemble de paramètres du signal OFDM, le maximum de la fonction objectif étant recherché pour un ensemble de valeurs possibles respectives de ces paramètres et une valeur de l'offset temporel, l'ensemble desdites valeurs possibles des paramètres et de l'offset temporel réalisant le maximum de la fonction objectif donnant les valeurs estimées respectives de ces paramètres et de cet offset.

Par exemple, ledit ensemble de paramètres est constitué par le nombre de sous-porteuses du multiplex OFDM, la longueur utile, et la durée de préfixe desdits symboles OFDM.

Selon un troisième mode de réalisation, l'on construit une matrice représentative d'une modulation OFDM utilisée pour générer ledit signal, ladite matrice dépendant dudit paramètre ainsi que d'un offset fréquentiel entre la porteuse du signal OFDM et la fréquence utilisée pour le démoduler en bande de base, et, pour chaque valeur possible du paramètre, on teste une pluralité de valeurs possibles dudit offset fréquentiel, et l'on calcule la valeur d'une fonction objectif

$$J\left(\tilde{\boldsymbol{\theta}}\right)=\dfrac{\left\|\mathbf{H}_{\tilde{\theta}}^{\mathbf{H}}\mathbf{y}\right\|^{2}}{\left\|\mathbf{H}_{\tilde{\theta}}\mathbf{H}_{\tilde{\theta}}^{\mathbf{H}}\right\|_{F}}$$

où $\|\cdot\|$ est la norme euclidienne, $\|\cdot\|_{F}$ est la norme de Frobenius, et l'on sélectionne comme estimation dudit paramètre et comme estimation de l'offset fréquentiel, le couple des valeurs possibles du paramètre et de l'offset qui réalise le maximum de la fonction objectif.

Par exemple, ledit paramètre est caractéristique de la longueur utile desdits symboles OFDM.

Selon un autre exemple, ladite méthode estime conjointement un ensemble de paramètres du signal OFDM, le maximum de la fonction objectif étant recherché pour un ensemble de valeurs possibles respectives de ces paramètres et une valeur de l'offset fréquentiel, l'ensemble desdites valeurs possibles des paramètres et de l'offset fréquentiel réalisant le maximum de la fonction objectif donnant les valeurs estimées respectives de ces paramètres et de cet offset.

Ledit ensemble de paramètres peut être notamment constitué par le nombre de sous-porteuses du multiplex OFDM, la longueur utile, et la durée de préfixe desdits symboles OFDM.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

La Fig. 1 illustre de manière schématique un signal OFDM ;
La Fig. 2 illustre de manière schématique un récepteur OFDM connu de l'état de la technique ;
La Fig. 3 donne un organigramme d'une méthode d'estimation de paramètres d'un signal OFDM selon un premier mode de réalisation de l'invention ;
La Fig. 4 donne un organigramme d'une méthode d'estimation de paramètres d'un signal OFDM selon un second mode de réalisation de l'invention ;
La Fig. 5 donne un organigramme d'une méthode d'estimation de paramètres d'un signal OFDM selon un troisième mode de réalisation de l'invention ;
La Fig. 6 illustre les performances relatives d'une méthode d'estimation de paramètre de signal OFDM selon l'invention et d'une méthode d'estimation connue de l'état de la technique.

## EXPOSÉ DÉTAILLÉ DE MODES DE RÉALISATION PARTICULIERS

Nous considérerons dans la suite le cas d'un système de télécommunication utilisant une modulation OFDM. Nous supposerons que le signal OFDM émis a la forme donnée par l'expression (1) et que les symboles OFDM peuvent contenir ou non un préfixe. Dans un souci de simplification, nous considérerons qu'ils contiennent un préfixe mais que celui-ci peut être vide *(D=0)* .

Nous nous placerons dans le cadre d'une estimation aveugle d'au moins un paramètre du signal OFDM, notamment d'un paramètre de modulation OFDM, tel que le nombre sous-porteuses, l'espacement fréquentiel entre ces sous-porteuses ou de manière équivalente la durée utile des symboles OFDM. L'ensemble des paramètres à estimer est représenté par un vecteur θ, par exemple θ=$(N,DT_c,NT_c)$. Dans certains cas, cet ensemble peut être réduit à un singleton. Par exemple, le nombre $N$ de porteuses et la durée du symbole OFDM $T_s = (N + D)T_c$ peuvent être connus, le paramètre à estimer à l'aveugle étant la durée utile $NT_c$ ou l'espacement entre sous-porteuses $1/NT_c$.

Le signal reçu par le récepteur peut s'exprimer, après démodulation en bande de base et échantillonnage à une fréquence $1/T_e$ supérieure à la fréquence à la fréquence de Nyquist $1/T_c$, par :

$$y(m) = \sum_{\ell=0}^{L} \lambda_\ell s_a(m - \tau_\ell) + b(m) \qquad (4)$$

où les $\lambda_\ell$ et $\tau_\ell$ sont respectivement les coefficients complexes d'atténuation et les retards associés aux différents trajets du canal exprimés en nombres d'échantillons, $L$ est le nombre total de trajets et $b(m) = b(mT_e)$ où $b(t)$ est un bruit blanc additif gaussien.

Sans perte de généralité mais par souci de simplification, nous nous restreindrons par la suite au cas d'un canal monotrajet. Dans ce cas, on peut monter que l'équation (4) se simplifie :

$$y(m) = \frac{1}{\sqrt{N}} \sum_{k=0}^{K-1} \sum_{n=0}^{N-1} a_{k,n} e^{-2i\pi \frac{n}{NT_c}\left(mT_e - DT_c - k(N+D)T_c\right)} g\left(mT_e - k(N+D)T_c\right) + b(m)$$

$$(4')$$

en prenant pour référence de temps le début d'un symbole OFDM. De manière équivalente, cette équation peut être exprimée sous la forme matricielle

$$\mathbf{y} = \mathbf{H_0}\mathbf{a} + \mathbf{b} \qquad (5)$$

où $\mathbf{y} = (y(0),y(1),...,y(M-1))^T$ , $(.)^T$ représente l'opération de transposition, $M = \lfloor T_0/T_e \rfloor$ où $T_0$ est la longueur de la fenêtre d'observation du signal OFDM et $\lfloor x \rfloor$ est le plus grand entier inférieur ou égal à x, $\mathbf{a}_k = (a_{k,0},a_{k,1},...,a_{k,M-1})^T$ et $\mathbf{a} = \left(\mathbf{a_0^T}, \mathbf{a_1^T}, .., \mathbf{a_{K-1}^T}\right)^T$ avec $K = \lceil T_0/T_s \rceil$ et $\lceil x \rceil$ est le plus petit entier supérieur ou égal à $x$, $\mathbf{b} = (b(0),b(1),...,b(M-1))^T$. Autrement dit, $\mathbf{y}$ est le vecteur de taille $M$ constitué des échantillons reçus en bande de base, $\mathbf{a}$ est un vecteur de taille $KN$ représentatif de la séquence des $KN$ symboles de modulation $a_{k,n}$ modulant les sous-porteuses $n = 0,..,N$-1 des symboles OFDM $k = 0,..,K$-1 dans la fenêtre d'observation, et $\mathbf{b}$ est le vecteur constitué des échantillons de bruit.

De manière générale, la matrice $\mathbf{H}_\theta$ est représentative du canal et de la modulation OFDM, cette modulation étant paramétrée par un ensemble θ de paramètres, par exemple θ est le triplet θ = $(N,DT_c,NT_c)$. Nous nous placerons dans le cas d'un canal à évanouissement uniforme (*flat fading channel*). La matrice $\mathbf{H}_\theta$ n'est alors représentative que de la modulation OFDM. Plus précisément, si la fonction de mise en forme g(t) peut être approximée par une fonction fenêtre, les éléments de la matrice $\mathbf{H}_\theta$ sont nuls exceptés ceux définis à un facteur multiplicatif près par :

$$H_\theta\left(m,k_m N+n\right)=\frac{1}{\sqrt{N}}e^{-2i\pi nm\frac{T_e}{NT_c}}e^{2i\pi n(k_m+1)\frac{DT_c}{NT_c}} \qquad (6)$$

où $m = 0,..,M\text{-}1$, $n = 0,..,N\text{-}1$ et où $k_m$ est l'entier unique vérifiant :

$$m\frac{T_e}{T_s}-1<k_m\le m\frac{T_e}{T_s} \qquad (7)$$

Ainsi, la matrice $\mathbf{H}_\theta$, de taille $M\times KN$, a une structure par blocs, la taille de chaque bloc étant $\lfloor T_s/T_e\rfloor\times N$.

Dans le contexte d'une estimation aveugle, le récepteur OFDM a simplement connaissance des vecteurs $\mathbf{y}$, chaque vecteur étant constitué des échantillons du signal OFDM, démodulé en bande de base et pris en compte pendant une fenêtre d'observation. Le récepteur connaît naturellement aussi la fréquence d'échantillonnage $1/T_e$ utilisée pour échantillonner le signal OFDM en bande de base et la largeur $T_0$ de la fenêtre d'observation.

L'idée à la base de l'invention est de rechercher la matrice $\mathbf{H}_{\bar{\theta}}^{\mathbf{H}}$ ayant une forme selon (6) à savoir dont les éléments non nuls sont donnés par :

$$H_{\bar{\theta}}\left(m,\bar{k}_m\bar{N}+n\right)=\frac{1}{\sqrt{\bar{N}}}e^{-2i\pi nm\frac{T_e}{NT_c}}e^{2i\pi n(\bar{k}_m+1)\frac{\overline{DT_c}}{NT_c}} \qquad (8)$$

où l'on a noté par $\bar{N}$ $\overline{NT_c}$, $\overline{DT_c}$ les valeurs de paramètres issues de $\bar{\theta}$, et qui maximise $\left\|\mathbf{H}_{\bar{\theta}}^{\mathbf{H}}\mathbf{y}\right\|$ sous une certaine contrainte, $\|\mathbf{x}\|$ représentant ici la norme euclidienne du vecteur $\mathbf{x}$. Cette contrainte a pour but de normaliser la matrice $\mathbf{H}_{\bar{\theta}}$ au sens d'une certaine norme décrite ci-après.

Plus précisément, il est proposé d'utiliser la fonction objectif suivants :

$$J\left(\bar{\theta}\right)=\frac{E\left\{\left\|\mathbf{H}_{\bar{\theta}}^{\mathbf{H}}\mathbf{y}\right\|^2\right\}}{\left\|\mathbf{H}_{\bar{\theta}}\mathbf{H}_{\bar{\theta}}^{\mathbf{H}}\right\|_F} \qquad (9)$$

où $\left\|\mathbf{A}\right\|_F=\sqrt{Tr\left(\mathbf{A}^{\mathbf{H}}\mathbf{A}\right)}$ est la norme de Frobenius de la matrice $\mathbf{A}$, $Tr(.)$ désigne la trace et $E\{.\}$ indique ici la valeur moyenne prise sur les vecteurs $\mathbf{y}$, c'est-à-dire sur une séquence de fenêtres d'observation.

En pratique toutefois, sauf à connaître la durée du symbole OFDM $T_s = (N+D)T_c$ et à choisir une longueur de fenêtre d'observation $T_0$ multiple de cette durée, les fenêtres d'observations consécutives ne démarrent pas avec un même retard par rapport au début d'un symbole OFDM et l'on se contente de prendre une valeur instantanée au numérateur soit :

$$J\left(\bar{\theta}\right)=\frac{\left\|\mathbf{H}_{\bar{\theta}}^{\mathbf{H}}\mathbf{y}\right\|^2}{\left\|\mathbf{H}_{\bar{\theta}}\mathbf{H}_{\bar{\theta}}^{\mathbf{H}}\right\|_F} \qquad (9')$$

Il est possible de montrer qu'en absence de bruit la fonction objectif $J(\overline{\theta})$ possède la propriété suivants :

$$J\left(\overline{\theta}\right) \leq J\left(\theta\right) = \left\|\mathbf{H_0}\mathbf{H_0^H}\right\|_F \qquad (10)$$

où $\mathbf{H}_\theta$ est la matrice selon l'expression (6) utilisée par l'émetteur OFDM, c'est-à-dire correspondant aux paramètres $\theta$ du signal OFDM effectivement transmis.

La preuve de la propriété (10) s'obtient en supposant que les symboles $a_{k,n}$ sont des variables aléatoires indépendantes et identiquement distribuées. Dans ces conditions la matrice de covariance de $\mathbf{a}$ est $E\{\mathbf{a}\mathbf{a}^H\} = I_{KN}$ où $E\{.\}$ signifie ici la valeur moyenne sur les symboles $a_{k,n}$ et $I_{\mathbf{KN}}$ est la matrice identité de taille $KN \times KN$. On a alors :

$$E\left\{\left\|\mathbf{H_{\overline{\theta}}^H}\mathbf{y}\right\|^2\right\} = Tr\left(\mathbf{H_{\overline{\theta}}^H}\mathbf{H_\theta}\mathbf{H_\theta^H}\mathbf{H_{\overline{\theta}}}\right) \qquad (11)$$

On rappelle que, dans cette expression, $\theta$ correspond aux paramètres du signal OFDM transmis et $\overline{\theta}$ aux paramètres testés.

La propriété (10) découle de l'inégalité suivante, corollaire de l'inégalité de Cauchy-Schwarz appliquée à la norme de Frobenius pour deux matrices $\mathbf{A}$ et $\mathbf{B}$ quelconques :

$$\left\|\mathbf{A^H}\mathbf{B}\right\|_F^2 \leq \left\|\mathbf{A^H}\mathbf{A}\right\|_F \left\|\mathbf{B^H}\mathbf{B}\right\|_F \qquad (12)$$

En effet, en appliquant (12) aux $\mathbf{A} = \mathbf{H_{\overline{\theta}}}\mathbf{H_{\overline{\theta}}^H}$ matrices et $\mathbf{B} = \mathbf{H_0}\mathbf{H_0^H}$ et compte tenu de (11), on a :

$$E\left\{\left\|\mathbf{H_{\overline{\theta}}^H}\mathbf{y}\right\|^2\right\} \leq \left\|\mathbf{H_{\overline{\theta}}}\mathbf{H_{\overline{\theta}}^H}\right\|_F \left\|\mathbf{H_0}\mathbf{H_0^H}\right\|_F \qquad (13)$$

l'égalité n'étant atteinte que si $\mathbf{H_{\overline{\theta}}}\mathbf{H_{\overline{\theta}}^H} = \mathbf{H_0}\mathbf{H_0^H}$. De par la forme des matrices $\mathbf{H_{\overline{\theta}}}$ cette égalité n'est elle-même vérifiée que si $\theta = \overline{\theta}$.

En définitive, selon le premier mode de réalisation de l'invention l'estimation $\hat{\theta}$ est donnée par :

$$\hat{\theta} = \arg\max_{\overline{\theta}}\left(J\left(\overline{\theta}\right)\right) \qquad (14)$$

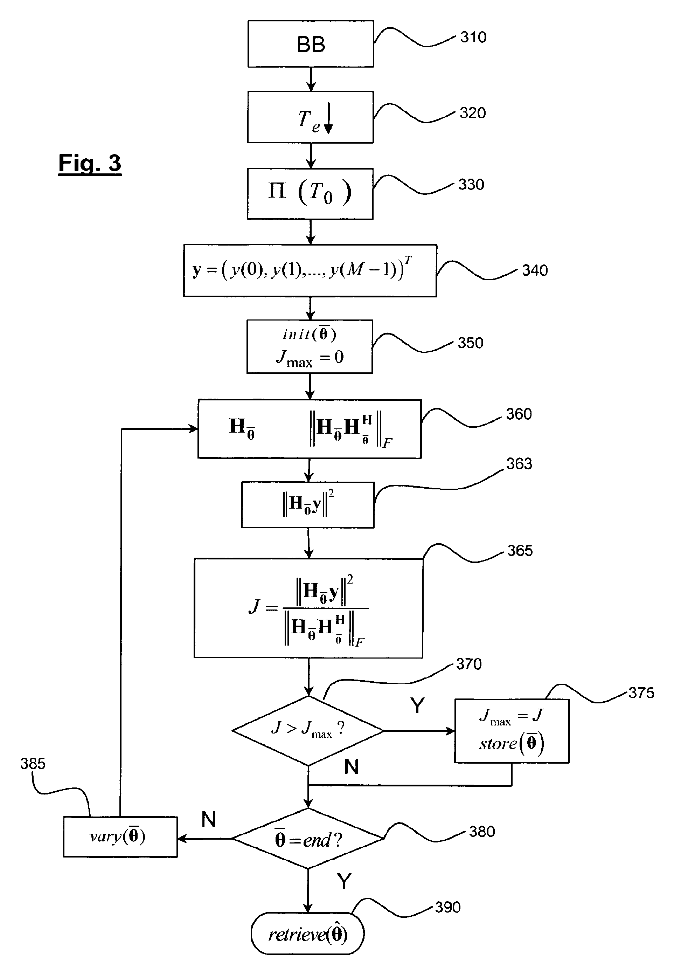

La Fig. 3 illustre de manière schématique l'organigramme d'une méthode d'estimation d'au moins un paramètre de signal OFDM selon un premier mode de réalisation de l'invention.

A l'étape 310, le signal OFDM est démodulé en bande de base, puis échantillonné en 320 à une fréquence $1/T_e$ supérieure à la fréquence de Nyquist. On connaît généralement l'ordre de grandeur de $1/T_c$, autrement dit de la largeur de bande du signal OFDM, ce qui permet de choisir la fréquence d'échantillonnage en conséquence.

A l'étape 330, on sélectionne un bloc de $M$ échantillons complexes correspondant à une fenêtre d'observation de largeur donnée $T_0$. Si l'on connaît la durée $T_s$ du symbole OFDM, cette largeur est avantageusement choisie comme un multiple de $T_s$.

En 340, on construit le vecteur $\mathbf{y}$ à partir des $M$ échantillons complexes.

A l'étape 350, on initialise les paramètres à tester $\overline{\theta}$, ainsi que la valeur $J_{max}$ par exemple $J_{max} = 0$.

On entre ensuite dans une boucle itérative dans laquelle on fait varier les paramètres à tester $\overline{\theta}$ dans un pavé

prédéterminé.

En 360 on calcule la matrice $\mathbf{H}_{\overline{\theta}}$ à partir de l'expression (8), les valeurs intervenant dans cette expression étant, selon le cas, soit connues du récepteur soit fournies par $\overline{\theta}$. On calcule ensuite la norme de Frobenius de la matrice $\mathbf{H}_{\hat{\theta}}\mathbf{H}_{\overline{\theta}}^{\mathbf{H}}$ .

A l'étape 363, on calcule la norme euclidienne du vecteur $\mathbf{H}_{\overline{\theta}}^{\mathbf{H}}\mathbf{y}$ .

A l'étape 365 on calcule la valeur de $\left\|\mathbf{H}_{\overline{\theta}}^{\mathbf{H}}\mathbf{y}\right\|^2$, puis la valeur $J$ prise par la fonction objectif, soit

$$J = \frac{\left\|\mathbf{H}_{\overline{\theta}}^{\mathbf{H}}\mathbf{y}\right\|^2}{\left\|\mathbf{H}_{\overline{\theta}}\mathbf{H}_{\overline{\theta}}^{\mathbf{H}}\right\|_F} \; .$$

A l'étape 370, on teste si la valeur ainsi obtenue est supérieure à $J_{max}$. Dans l'affirmative, on met à jour en 375 la valeur $J_{max}$ par la valeur $J$ et on stocke en mémoire les paramètres testés $\overline{\theta}$.

On teste ensuite en 380 si on a parcouru entièrement le pavé de paramètres et dans la négative, on fait varier $\overline{\theta}$, par exemple par incrémentation, et l'on retourne à l'étape de calcul 360.

La valeur estimée $\hat{\theta}$ des paramètres est lue dans la mémoire à l'étape 390.

La méthode d'estimation précédente donne de bons résultats lorsque le début de la fenêtre d'observation coïncide avec le début d'un symbole OFDM. Toutefois, en règle générale la fenêtre d'observation n'est pas synchronisée sur un symbole OFDM mais présente un offset $\tau$ sur le début d'un tel symbole.

Dans ce cas, le signal OFDM reçu peut s'exprimer comme :

$$\tilde{y}(m) = y\left(m - \tau_e\right) \qquad\qquad (15)$$

où $y(m)$ est donné par l'expression (4') et $\tau_e = \left\lfloor \dfrac{\tau}{T_e} \right\rfloor$ est l'offset libellé en nombre de périodes d'échantillonnage.

Afin de traiter la présence de cet offset temporel, l'ensemble de paramètres $\overline{\theta}$ est augmenté de l'offset $\tau$, l'ensemble ainsi augmenté étant noté $\tilde{\theta} = \overline{\theta} \cup \{\tau\}$ et l'on définit une nouvelle matrice $\mathbf{H}_{\tilde{\theta}}$ obtenue à partir de $\mathbf{H}_{\overline{\theta}}$ en supprimant les $\tau_e$ premières lignes de cette matrice. La matrice $\mathbf{H}_{\tilde{\theta}}$ est alors une matrice de taille $(M-\tau_e) \times \overline{KN}$ où $\overline{N}$ est le nombre de sous-porteuses fourni par $\theta$ et $\overline{K} = \lfloor T_0/(\overline{NT_c} + \overline{DT_c}) \rfloor$. De même, les $\tau_e$ premiers échantillons de la fenêtre d'observation ne seront pas pris en considération dans le calcul de la fonction de coût.

De manière similaire à (9') on peut construire une fonction objectif étendue $J(\tilde{\theta})$ qui prend en compte l'offset $\tau_e$ sont :

$$J\left(\tilde{\theta}\right) = \frac{\left\|\mathbf{H}_{\tilde{\theta}}^{\mathbf{H}}\mathbf{y}\right\|^2}{\left\|\mathbf{H}_{\hat{\theta}}\mathbf{H}_{\tilde{\theta}}^{\mathbf{H}}\right\|_F} \qquad\qquad (16)$$

On prendra garde que dans l'expression (16), la taille du vecteur **y** dépend de $\tau_e$ puisque les $\tau_e$ premiers échantillons sont éliminés.

On peut montrer que $J\left(\tilde{\theta}\right) \le J\left(\theta\right) = \left\|\mathbf{H}_{\theta}\mathbf{H}_{\theta}^{\mathbf{H}}\right\|_F$ et que l'égalité n'est atteinte que si les paramètres du signal OFDM sont correctement estimés et si le signal OFDM est correctement synchronisé, autrement dit si la valeur de $\tau_e$ est également correcte.

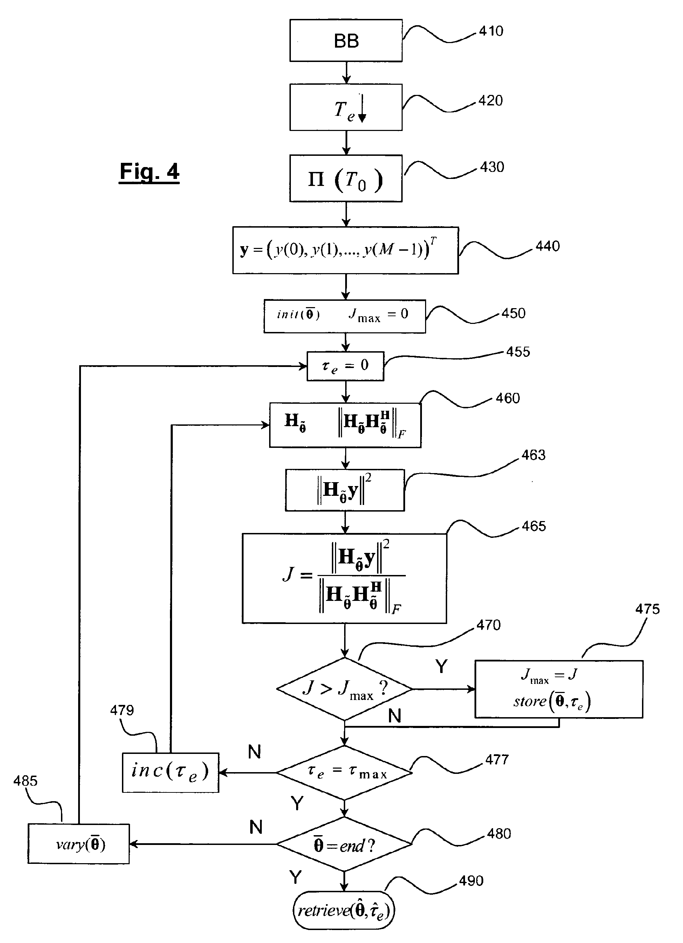

La Fig. 4 illustre schématiquement une méthode d'estimation de paramètre OFDM selon un second mode de réalisation de l'invention.

Les étapes 410 à 450 sont identiques aux étapes 310 à 350 de la Fig. 3 et ne seront donc pas décrites à nouveau.

A l'étape 455 on initialise la valeur d'offset $\tau_e$ par exemple à zéro.

A l'étape 460, on calcule la matrice $\mathbf{H}_{\overline{\theta}}$ puis on en déduit la matrice $\mathbf{H}_{\overline{\theta}}$ par suppression des $\tau_e$, premières lignes.

On calcule alors la norme de Frobenius de $\mathbf{H}_{\hat{\theta}}\mathbf{H}_{\hat{\theta}}^{H}$ .

A l'étape 463, on calcule la norme euclidienne $\|\mathbf{H}_\theta\mathbf{y}\|^2$.

On calcule ensuite en 465 la valeur $J$ de la fonction objectif à partir de l'expression (16).

Comme précédemment, si la valeur $J$ est supérieure à la valeur $J_{max}$ courante, $J_{max}$ est mise à jour à la valeur $J$. Les paramètres $\overline{\theta}$ et l'offset $\tau_e$ correspondant sont stockés en mémoire.

On teste en 477 si $\tau_e$ a atteint sa valeur maximale $\tau_{max}$ et dans la négative on l'incrémente pour retourner à l'étape 460 de calcul matriciel. Dans l'affirmative, on teste en 480 si l'on a parcouru tout le pavé de paramètres. Si ce n'est pas le cas, les paramètres $\overline{\theta}$ sont modifiés en 485 et l'on retourne à l'étape 455 pour une nouvelle initialisation de l'offset.

En revanche, si le pavé a été entièrement parcouru, on termine par 490 en lisant en mémoire l'offset $\tau_e$ et les paramètres $\overline{\theta}$ correspondants. Ces valeurs donnent respectivement l'estimation $\hat{\tau}_e$ de l'offset et l'estimation, $\hat{\theta}$, des paramètres.

La méthode d'estimation précédente donne de bons résultats lorsque le démodulateur en bande de base du récepteur OFDM est bien calé sur la porteuse RF. A défaut, il apparaît un offset de fréquence $\Delta f$ entre le récepteur et l'émetteur qui peut introduire une erreur d'estimation.

Afin d'éliminer cette source d'erreur, l'ensemble de paramètres $\overline{\theta}$ est augmenté de l'offset de fréquence normalisé $\delta f = \Delta f.T_c$, l'ensemble ainsi augmenté étant noté

$$\breve{\theta} = \overline{\theta} \cup \{\delta f\}$$

et l'on définit une nouvelle matrice

$$\mathbf{H}_{\breve{\theta}}$$

prenant en compte les rotations de phase dues à cet offset de fréquence soit :

$$H_{\breve{\theta}}\left(m, k_m \overline{N} + n\right) = \frac{1}{\sqrt{\overline{N}}} e^{-2i\pi m T_e \frac{n+\delta f}{N T_c}} e^{2i\pi n(\overline{k}_m + 1)\frac{\overline{DT_c}}{N T_c}} \qquad (17)$$

où l'on rappelle que $\overline{N}$ $\overline{NT_c}$, $\overline{DT_c}$ sont les valeurs issues de $\overline{\theta}$.

De manière similaire à (9') on peut construire une fonction objectif étendue

$$J\left(\breve{\theta}\right)$$

qui prend en compte l'offset de fréquence, soit :

$$J\left(\breve{\theta}\right) = \frac{\left\|\mathbf{H}_{\breve{\theta}}^{H}\mathbf{y}\right\|^2}{\left\|\mathbf{H}_{\breve{\theta}}\mathbf{H}_{\breve{\theta}}^{H}\right\|_F} \qquad (18)$$

On peut montrer comme précédemment que

$$J\left(\bar{\theta}\right) \leq J\left(\theta\right) = \left\| \mathbf{H_0}\mathbf{H_0^H} \right\|_F$$

, et que l'égalité n'est atteinte que si les paramètres du signal OFDM sont correctement estimés et si l'offset de fréquence est également correct, c'est-à-dire s'il correspond à la différence réelle entre la fréquence de la porteuse utilisée à l'émission et la fréquence de démodulation.

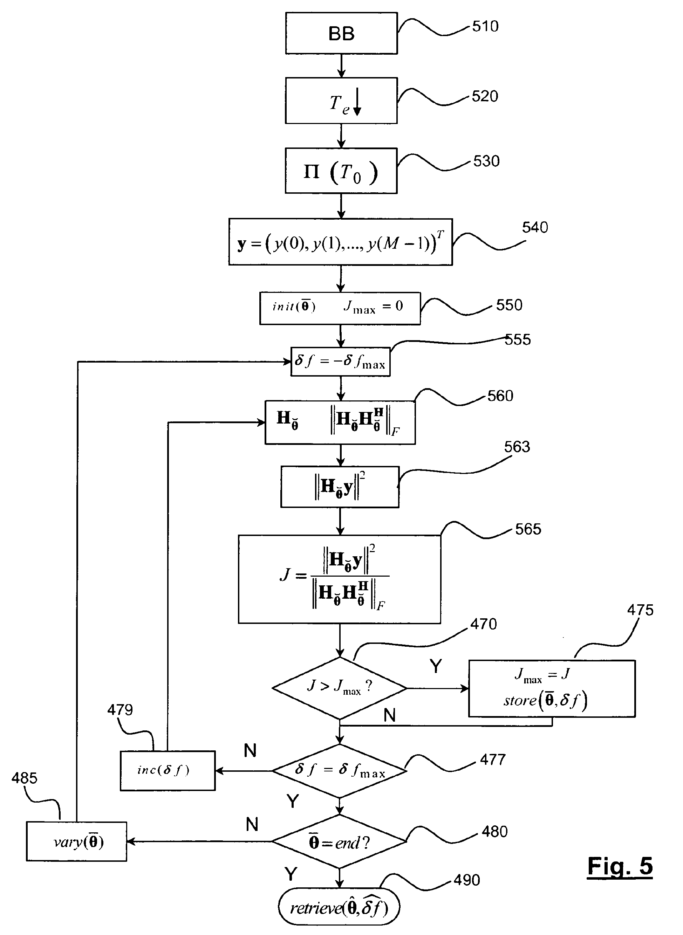

La Fig. 5 illustre schématiquement une méthode d'estimation de paramètre OFDM selon un troisième mode de réalisation de l'invention.

Les étapes 510 à 550 sont identiques aux étapes 310 à 350 de la Fig. 3 et ne seront donc pas décrites à nouveau.

A l'étape 555, on initialise la valeur d'offset de fréquence normalisé, par exemple à une valeur négative -$\delta f_{max}$.

A l'étape 560, on calcule la matrice

$$\mathbf{H_{\breve{\theta}}}$$

selon l'expression (17) puis la norme de Frobenius de

$$\mathbf{H_{\breve{\theta}}}\mathbf{H_{\breve{\theta}}^H} \ .$$

A l'étape 563, on calcule la norme euclidienne $\|H_\theta y\|^2$.

On calcule ensuite en 565 la valeur $J$ de la fonction objectif à partir de l'expression (18). Si cette valeur $J$ est supérieure à la valeur $J_{max}$ courante, $J_{max}$ est mise à jour à la valeur $J$. Les paramètres $\bar{\theta}$ et l'offset $\delta f$ correspondant sont stockés en mémoire.

On teste en 577 si $\delta f$ a atteint sa valeur maximale $\delta f_{max}$ et dans la négative on l'incrémente, par exemple de $1/\nu$, où $\nu$ est un entier prédéterminé, avant de retourner à l'étape 560 de calcul matriciel.

Dans l'affirmative, on teste en 580 si l'on a parcouru tout le pavé de paramètres. Si ce n'est pas le cas, les paramètres $\bar{\theta}$ sont modifiés en 585 et l'on retourne à l'étape 555 pour une nouvelle initialisation de l'offset de fréquence.

En revanche, si le pavé a été entièrement parcouru, on termine par 590 en lisant dans mémoire l'offset $\delta f$ et les paramètres $\bar{\theta}$ correspondants. Ces valeurs donnent respectivement l'estimation $\widehat{\Delta f} = \delta f / T_c$ de l'offset et l'estimation, $\hat{\theta}$, des paramètres du signal OFDM.

L'homme du métier comprendra qu'il est possible de combiner les avantages des second et troisième modes de réalisation en évaluant conjointement l'offset temporel $\tau_e$ et l'offset fréquentiel $\delta f$.

Ainsi, selon un quatrième mode de réalisation, on augmente l'ensemble de paramètres $\bar{\theta}$ à la fois de l'offset temporel $\tau_e$ et de l'offset fréquentiel $\delta f$, l'ensemble de paramètres ainsi augmenté étant noté $\Theta=\bar{\theta}\cup\{\tau_e\}\cup\{\delta f\}$ et l'on définit une nouvelle matrice $\mathbf{H_\Theta}$ prenant en compte à la fois les rotations de phase dues à l'offset de fréquence et de la désynchronisation due à l'offset temporel. En d'autres termes, la matrice $\mathbf{H_\Theta}$ est obtenue en supprimant les $\tau_e$ premières lignes de la matrice $\mathbf{H_{\bar{\theta}}}$ définie par (17). On définit alors la fonction objectif :

$$J\left(\mathbf{\Theta}\right) = \frac{\left\| \mathbf{H_\Theta^H}\mathbf{y} \right\|^2}{\left\| \mathbf{H_\Theta}\mathbf{H_\Theta^H} \right\|_F} \tag{19}$$

où l'on comprendra que le vecteur $\mathbf{y}$ figurant en (19) comme celui figurant en (16) est amputé de ses $\tau_e$ premières composantes.

On peut là encore montrer que $J\left(\mathbf{\Theta}\right) \leq J\left(\theta\right) = \left\| \mathbf{H_0}\mathbf{H_\theta^H} \right\|_F$ et que l'égalité n'est atteinte que si les paramètres du signal OFDM sont correctement estimés et si les offsets temporel et fréquentiel sont également corrects.

La mise en oeuvre, non illustrée, de ce quatrième mode de réalisation fait appel, comme dans les second et troisième modes, à une boucle itérative permettant de parcourir un pavé de paramètres $\bar{\theta}$ mais aussi à des seconde et troisième boucles imbriquées balayant l'intervalle d'offset temporel, par exemple $[0,\tau_{max}]$, et l'intervalle d'offset fréquen-

tiel, par exemple [-$\delta f_{max}$,$\delta f_{max}$], l'ordre de ces deux boucles important peu.

Au terme du balayage, les valeurs des paramètres $\overline{\theta}$ et celles des offsets temporel et fréquentiel $\tau_e$ et $\delta_f$, réalisant le maximum de la fonction objectif, sont lues dans la mémoire. Elles donnent l'estimation $\hat{\theta}$ ainsi que l'estimation des offsets précités.

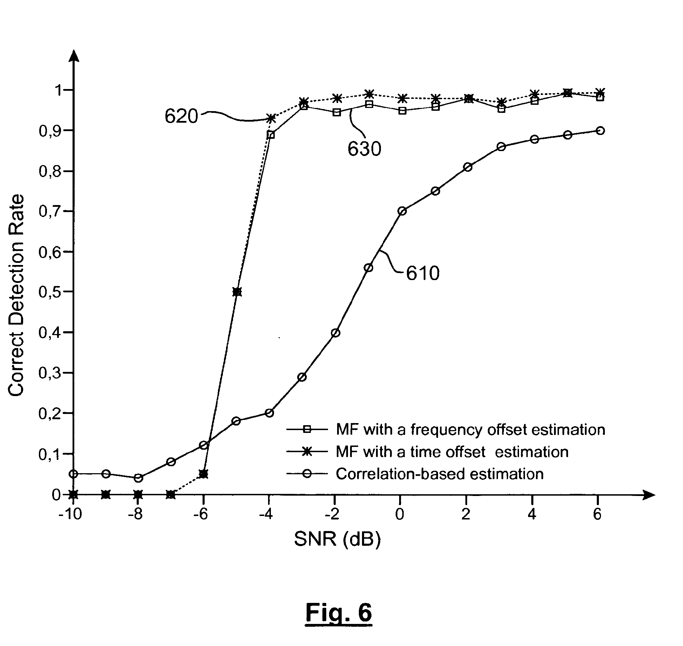

La Fig. 6 représente les performances relatives de différentes méthodes d'un paramètre OFDM (ici la durée utile $NT_c$ des symboles OFDM) en termes de taux d'estimation correcte.

La courbe 610 correspond à une méthode d'estimation selon l'état de la technique, au moyen de la fonction d'autocorrélation.

La courbe 620 correspond à une méthode d'estimation selon le second mode de réalisation de l'invention, c'est-à-dire avec prise en compte de l'offset temporel.

La courbe 630 correspond à une méthode d'estimation selon le troisième mode de réalisation de l'invention, c'est-à-dire avec prise en compte de l'offset fréquentiel.

On constate que dès lors que le rapport signal à bruit est supérieur à -6dB les méthodes d'estimation selon le second ou le troisième mode de réalisation de l'invention donnent des résultats sensiblement meilleurs que ceux obtenus par la méthode d'estimation selon l'état de la technique.

## Revendications

1. Méthode d'estimation aveugle d'au moins un paramètre d'un signal OFDM constitué d'une séquence de symboles OFDM, le signal OFDM étant démodulé en bande de base puis échantillonné pendant une période d'observation, **caractérisée en ce que** l'on forme un vecteur **y** des échantillons ainsi obtenus, et que pour une pluralité de valeurs possibles dudit paramètre $|\overline{\theta}|$, l'on construit une matrice $\mathbf{H}_{\overline{\theta}}$ représentative d'une modulation OFDM utilisée pour générer ledit signal, ladite matrice dépendant dudit paramètre, et que l'on calcule la valeur d'une fonction objectif

$$J\left(\overline{\boldsymbol{\theta}}\right) = \frac{\left\|\mathbf{H}_{\overline{\boldsymbol{\theta}}}^{\mathrm{H}}\mathbf{y}\right\|^2}{\left\|\mathbf{H}_{\overline{\boldsymbol{\theta}}}\mathbf{H}_{\overline{\boldsymbol{\theta}}}^{\mathrm{H}}\right\|_F} \quad \text{où } \|\cdot\| \text{ est la norme euclidienne, } \|\cdot\|_F \text{ est la norme de Frobenius, et que l'on sélectionne}$$

comme estimation $\hat{\theta}$ dudit paramètre ladite valeur possible de paramètre qui réalise le maximum de la fonction objectif.

2. Méthode d'estimation selon la revendication 1, **caractérisée en ce que** ledit paramètre est caractéristique de la longueur utile desdits symboles OFDM.

3. Méthode d'estimation selon la revendication 1, **caractérisée en ce qu'**elle estime conjointement un ensemble de paramètres du signal OFDM, le maximum de la fonction objectif étant recherché pour un ensemble de valeurs possibles respectives de ces paramètres, l'ensemble desdites valeurs possibles réalisant le maximum de la fonction objectif donnant les valeurs estimées respectives de ces paramètres.

4. Méthode d'estimation selon la revendication 3, **caractérisé en ce que** ledit ensemble de paramètres est constitué par le nombre $N$ de sous-porteuses du multiplex OFDM, la longueur utile $|NT_c|$, et la durée de préfixe $DT_c$ desdits symboles OFDM.

5. Méthode d'estimation aveugle d'au moins un paramètre d'un signal OFDM constitué d'une séquence de symboles OFDM, le signal OFDM étant démodulé en bande de base puis échantillonné pendant une période d'observation, **caractérisée en ce que** l'on forme un vecteur des échantillons ainsi obtenus, et que pour une pluralité de valeurs possibles dudit paramètre $\overline{\theta}$ l'on construit une matrice $\mathbf{H}_{\overline{\theta}}$ représentative d'une modulation OFDM utilisée pour générer ledit signal, ladite matrice dépendant dudit paramètre, que pour chaque valeur possible du paramètre, on teste une pluralité de valeurs possibles d'un offset temporel ($\tau$) entre le début de la période d'observation et le début d'un symbole OFDM, en éliminant pour chaque valeur possible dudit offset temporel un nombre correspondant de premières lignes de ladite matrice et le même nombre de premiers éléments dudit vecteur pour former une matrice

tronquée $\mathbf{H}_{\overline{\theta}}$ et un vecteur tronqué **y**, que l'on calcule la valeur d'une fonction objectif $J\left(\tilde{\boldsymbol{\theta}}\right) = \dfrac{\left\|\mathbf{H}_{\tilde{\boldsymbol{\theta}}}^{\mathrm{H}}\mathbf{y}\right\|^2}{\left\|\mathbf{H}_{\tilde{\boldsymbol{\theta}}}\mathbf{H}_{\tilde{\boldsymbol{\theta}}}^{\mathrm{H}}\right\|_F}$ où

$\|\cdot\|$ est la norme euclidienne, $\|\cdot\|_F$ est la norme de Frobenius, et que l'on sélectionne comme estimation $\overline{\theta}$ dudit

paramètre et comme estimation de l'offset temporel, le couple des valeurs possibles du paramètre et de l'offset qui réalise le maximum de la fonction objectif.

**6.** Méthode d'estimation selon la revendication 5, **caractérisée en ce que** ledit paramètre est caractéristique de la longueur utile desdits symboles OFDM.

**7.** Méthode d'estimation selon la revendication 5, **caractérisée en ce qu'**elle estime conjointement un ensemble de paramètres du signal OFDM, le maximum de la fonction objectif étant recherché pour un ensemble de valeurs possibles respectives de ces paramètres et une valeur de l'offset temporel, l'ensemble desdites valeurs possibles des paramètres et de l'offset temporel réalisant le maximum de la fonction objectif donnant les valeurs estimées respectives de ces paramètres et de cet offset.

**8.** Méthode d'estimation selon la revendication 7, **caractérisé en ce que** ledit ensemble de paramètres est constitué par le nombre $|N|$ de sous-porteuses du multiplex OFDM, la longueur utile $|NT_c|$, et la durée de préfixe $|DT_c|$ desdits symboles OFDM.

**9.** Méthode d'estimation aveugle d'au moins un paramètre d'un signal OFDM constitué d'une séquence de symboles OFDM, le signal OFDM étant démodulé en bande de base puis échantillonné pendant une période d'observation, **caractérisée en ce que** l'on forme un vecteur y des échantillons ainsi obtenus, que pour une pluralité de valeurs possibles dudit paramètre $\overline{\theta}$, l'on construit une matrice $\mathbf{H}_{\overline{\theta}}$ représentative d'une modulation OFDM utilisée pour générer ledit signal, ladite matrice dépendant dudit paramètre ainsi que d'un offset fréquentiel entre la porteuse du signal OFDM et la fréquence utilisée pour le démoduler en bande de base, que pour chaque valeur possible du paramètre, on teste une pluralité de valeurs possibles dudit offset fréquentiel, et que l'on calcule la valeur d'une fonction objectif

$$ J\left(\breve{\boldsymbol{\theta}}\right) = \frac{\left\| \mathbf{H}_{\breve{\boldsymbol{\theta}}}^{\mathbf{H}} \mathbf{y} \right\|^2}{\left\| \mathbf{H}_{\breve{\boldsymbol{\theta}}} \mathbf{H}_{\breve{\boldsymbol{\theta}}}^{\mathbf{H}} \right\|_F} $$

où $\|\cdot\|$ est la norme euclidienne, $\|\cdot\|_F$ est la norme de Frobenius, et que l'on sélectionne comme estimation $\overline{\theta}$ dudit paramètre et comme estimation de l'offset fréquentiel, le couple des valeurs possibles du paramètre et de l'offset qui réalise le maximum de la fonction objectif.

**10.** Méthode d'estimation selon la revendication 9, **caractérisée en ce que** ledit paramètre est caractéristique de la longueur utile desdits symboles OFDM.

**11.** Méthode d'estimation selon la revendication 9, **caractérisée en ce qu'**elle estime conjointement un ensemble de paramètres du signal OFDM, le maximum de la fonction objectif étant recherché pour un ensemble de valeurs possibles respectives de ces paramètres et une valeur de l'offset fréquentiel, l'ensemble desdites valeurs possibles des paramètres et de l'offset fréquentiel réalisant le maximum de la fonction objectif donnant les valeurs estimées respectives de ces paramètres et de cet offset.

**12.** Méthode d'estimation selon la revendication 11, **caractérisé en ce que** ledit ensemble de paramètres est constitué par le nombre $N$ de sous-porteuses du multiplex OFDM, la longueur utile $NT_c$, et la durée de préfixe $DT_c$ desdits symboles OFDM.

**Claims**

**1.** A method for the blind estimation of at least one parameter of an OFDM signal made up of a sequence of OFDM symbols, the OFDM signal being baseband demodulated, then sampled during an observation period, **characterized in that** a vector **y** of the samples thus obtained is formed, and **in that** for a plurality of possible values of said parameter $\overline{\theta}$, a matrix $\mathbf{H}_{\overline{\theta}}$ is built that is representative of an OFDM modulation used to generate said signal, said matrix depending on said parameter, and **in that** the value of an objective function $J\left(\overline{\theta}\right)=\dfrac{\left\|\mathbf{H}_{\overline{\theta}}^{\mathrm{H}}\mathbf{y}\right\|^{2}}{\left\|\mathbf{H}_{\overline{\theta}}\mathbf{H}_{\overline{\theta}}^{\mathrm{H}}\right\|_{F}}$ is calculated, where $\|\cdot\|$ is the Euclidean norm, $\|\cdot\|_F$ is the Frobenius norm, and **in that** said possible parameter value that achieves the maximum of $\hat{\theta}$ the objective function is selected as the estimate of said parameter.

2. The estimation method according to claim 1, **characterized in that** said parameter is characteristic of the useful length of said OFDM symbols.

3. The estimation method according to claim 1, **characterized in that** it jointly estimates a set of parameters of the OFDM signal, the maximum of the objective function being sought for a set of respective possible values for said parameters, the set of said possible values achieving the maximum of the objective function yielding the respective estimated values of said parameters.

4. The estimation method according to claim 3, **characterized in that** said set of parameters can be made up of the number **N** of sub-carriers of the OFDM multiplex, the useful length $NT_c$, and the prefix duration $DT_c$, of said OFDM symbols.

5. A method for the blind estimation of at least one parameter of an OFDM signal made up of a sequence of OFDM symbols, the OFDM signal being baseband demodulated, then sampled during an observation period, **characterized in that** a vector of the samples thus obtained is formed, and **in that** for a plurality of possible values of said parameter $\overline{\theta}$, a matrix $\mathbf{H}_{\overline{\theta}}$ is built that is representative of an OFDM modulation used to generate said signal, said matrix depending on the parameter, **in that** for each possible value of the parameter, a plurality of possible values is tested for a temporal offset ($\tau$) between the beginning of the observation period and the beginning of an OFDM symbol, by eliminating, for each possible value of the temporal offset, a corresponding number of first lines of said matrix and the same number of first elements of said vector to form a truncated matrix $\mathbf{H}_{\tilde{\theta}}$ and a truncated vector **y**, the value of an objective function $J\left(\tilde{\theta}\right)=\dfrac{\left\|\mathbf{H}_{\tilde{\theta}}^{\mathrm{H}}\mathbf{y}\right\|^{2}}{\left\|\mathbf{H}_{\tilde{\theta}}\mathbf{H}_{\tilde{\theta}}^{\mathrm{H}}\right\|_{F}}$ is calculated, where $\|\cdot\|$ is the Euclidean norm, $\|\cdot\|_F$ is the Frobenius norm, and **in that** the pair of possible values of the parameter and the offset that achieve the maximum of the objective function are selected as the estimation $\overline{\theta}$ of said parameter and the estimation of the temporal offset.

6. The estimation method according to claim 5, **characterized in that** said parameter is characteristic of the useful length of said OFDM symbols.

7. The estimation method according to claim 5, **characterized in that** it jointly estimates a set of parameters of the OFDM signal, the maximum of the objective function being sought for a set of respective possible values of these parameters and a value of the temporal offset, the set of said possible values of the parameters and the temporal offset achieving the maximum of the objective function yielding the respective estimated values of those parameters and that offset.

8. The estimation method according to claim 7, **characterized in that** said set of parameters is made up of the number $N$ of sub-carriers of the OFDM multiplex, the useful length $NT_c$, and the prefix duration $DT_c$ of said OFDM symbols.

9. A method for the blind estimation of at least one parameter of an OFDM signal made up of a sequence of OFDM symbols, the OFDM signal being baseband demodulated, then sampled during an observation period, **characterized in that** a vector **y** of the samples thus obtained is formed, **in that** for a plurality of possible values of said parameter $\overline{\theta}$, a matrix $\mathbf{H}_{\overline{\theta}}$ is built that is representative of an OFDM modulation used to generate said signal, said matrix depending on said parameter as well as a frequency offset between the carrier of the OFDM signal and the frequency used to baseband demodulate it, **in that** for each possible value of the parameter, a plurality of possible values of said frequency offset are tested, and **in that** the value of an objective function

$$J\left(\breve{\theta}\right) = \frac{\left\|\mathbf{H}_{\breve{\theta}}^{\mathrm{H}}\mathbf{y}\right\|^2}{\left\|\mathbf{H}_{\breve{\theta}}\mathbf{H}_{\breve{\theta}}^{\mathrm{H}}\right\|_F}$$

is calculated, where $\|\cdot\|$ is the Euclidean norm, $\|\cdot\|_F$ is the Frobenius norm, and the pair of possible values of the parameter and the offset that achieve the maximum of the objective function are selected as the estimate $\bar{\theta}$ of said parameter and as the estimation of the frequency offset.

10. The estimation method according to claim 9, **characterized in that** said parameter is characteristic of the useful length of said OFDM symbols.

11. The estimation method according to claim 9, **characterized in that** it jointly estimates a set of parameters of the OFDM signal, the maximum of the objective function being sought for a set of respective possible values of these parameters and a value of the frequency offset, the set of said possible values of the parameters and the frequency offset achieving the maximum of the objective function yielding the respective estimated values of those parameters and that offset.

12. The estimation method according to claim 11, **characterized in that** said set of parameters can in particular be made up of the number $N$ of sub-carriers of the OFDM multiplex, the useful length $NT_c$, and the prefix duration $DT_c$ of said OFDM symbols.

**Patentansprüche**

1. Verfahren zur Blindabschätzung wenigstens eines Parameters eines OFDM-Signals, das durch eine Sequenz von OFDM-Symbolen gebildet wird, wobei das OFDM-Signal im Basisband demoduliert und dann während einer Beobachtungsperiode abgetastet wird, **dadurch gekennzeichnet, dass** man einen Vektor **y** von derart erhaltenen Abtastwerten bildet, und dass man für eine Mehrzahl von möglichen Werten des Parameters $\bar{\theta}$ eine Matrix $\mathbf{H}_{\bar{\theta}}$ konstruiert, die repräsentativ ist für eine zur Erzeugung des Signals verwendete OFDM-Modulation, wobei die Matrix von dem Parameter abhängt, und dass man den Wert einer Zielfunktion $\mathbf{J}\left(\bar{\theta}\right) = \dfrac{\left\|\mathbf{H}_{\bar{\theta}}^{\mathrm{H}}\mathbf{y}\right\|^2}{\left\|\mathbf{H}_{\bar{\theta}}\mathbf{H}_{\bar{\theta}}^{\mathrm{H}}\right\|_F}$ berechnet, wobei $\|\cdot\|$ die euklidische Norm ist und $\|\cdot\|_F$ die Frobenius-Norm ist, und dass man als Abschätzung $\ddot{\theta}$ des Parameters den möglichen Wert des Parameters auswählt, der das Maximum der Zielfunktion realisiert.

2. Verfahren zur Abschätzung nach Anspruch 1, **dadurch gekennzeichnet, dass** der Parameter kennzeichnend ist für die Nutzlänge der OFDM-Symbole.

3. Verfahren zur Abschätzung nach Anspruch 1, **dadurch gekennzeichnet, dass** es eine Gruppe von Parametern des OFDM-Signals gemeinsam abschätzt, wobei das Maximum der Zielfunktion für eine Gruppe jeweiliger möglicher Werte dieser Parameter gesucht wird, wobei die Gruppe der möglichen Werte, die das Maximum der Zielfunktion realisieren, die jeweiligen Abschätzwerte dieser Parameter ergibt.

4. Verfahren zur Abschätzung nach Anspruch 3, **dadurch gekennzeichnet, dass** die Gruppe von Parametern gebildet ist durch die Anzahl **N** von Unterträgern des OFDM-Multiplex, die Nutzlänge $\mathbf{NT}_c$ sowie die Präfixdauer $\mathbf{DT}_c$ der OFDM-Symbole.

5. Verfahren zur Blindabschätzung wenigstens eines Parameters eines OFDM-Signals, das durch eine Sequenz von OFDM-Symbolen gebildet ist, wobei das OFDM-Signal im Basisband demoduliert und dann während einer Beobachtungsperiode abgetastet wird, **dadurch gekennzeichnet, dass** man einen Vektor der derart erhaltenen Abtastwerte bildet, und dass man für eine Mehrzahl von möglichen Werten des Parameters $\bar{\theta}$ eine Matrix $\mathbf{H}_{\bar{\theta}}$ konstruiert, die repräsentativ ist für eine zur Erzeugung des Signals verwendete OFDM-Modulation, wobei die Matrix von dem Parameter abhängt, dass man für jeden möglichen Wert des Parameters eine Mehrzahl von möglichen Werten eines zeitlichen Offsets ($\tau$) zwischen dem Anfang der Beobachtungsperiode und dem Anfang eines OFDM-Symbols testet, wobei man für jeden möglichen Wert des zeitlichen Offsets eine entsprechende Zahl von ersten Zeilen der Matrix und die gleiche Zahl von ersten Elementen des Vektors eliminiert, um eine beschnittene Matrix $\mathbf{H}_{\hat{\theta}}$ und einen beschnittenen Vektor **y** zu bilden, dass man den Wert einer Zielfunktion

$$J(\overline{\theta}) = \frac{\left\| \mathbf{H}_{\overline{\theta}}^H \mathbf{y} \right\|^2}{\left\| \mathbf{H}_{\overline{\theta}} \mathbf{H}_{\overline{\theta}}^H \right\|_F}$$ berechnet, wobei $\|\cdot\|$ die euklidische Norm ist und $\|\cdot\|_F$ die FrobeniusNorm ist, und dass man

als Abschätzung $\overline{\theta}$ des Parameters und als Abschätzung des zeitlichen Offsets das Paar aus möglichen Werten des Parameters und des Offsets wählt, welches das Maximum der Zielfunktion realisiert.

6. Verfahren zur Abschätzung nach Anspruch 5, **dadurch gekennzeichnet, dass** der Parameter kennzeichnend ist für die Nutzlänge der OFDM-Symbole.

7. Verfahren zur Abschätzung nach Anspruch 5, **dadurch gekennzeichnet, dass** es eine Gruppe von Parametern des OFDM-Signals gemeinsam abschätzt, wobei das Maximum der Zielfunktion für eine Gruppe von jeweiligen möglichen Werten dieser Parameter und einen Wert des zeitlichen Offsets gesucht wird, wobei die Gruppe der möglichen Werte der Parameter und des zeitlichen Offsets, die das Maximum der Zielfunktion realisieren, die jeweiligen Abschätzwerte dieser Parameter und dieses Offsets ergibt.

8. Verfahren zur Abschätzung nach Anspruch 7, **dadurch gekennzeichnet, dass** die Gruppe von Parametern gebildet ist durch die Anzahl **N** von Unterträgern des OFDM-Multiplex, die Nutzlänge $\mathbf{NT}_C$ sowie die Präfixdauer $\mathbf{DT}_C$ der OFDM-Symbole.

9. Verfahren zur Blindabschätzung wenigstens eines Parameters eines OFDM-Signals, das durch eine Sequenz von OFDM-Symbolen gebildet ist, wobei das OFDM-Signal im Basisband demoduliert und dann während einer Beobachtungsperiode abgetastet wird, **dadurch gekennzeichnet, dass** man einen Vektor **y** von derart erhaltenen Abtastwerten bildet, dass man für eine Mehrzahl von möglichen Werten des Parameters $\overline{\theta}$ eine Matrix $\mathbf{H}_{\overline{\theta}}$ konstruiert, die repräsentativ ist für eine zur Erzeugung des Signals verwendete OFDM-Modulation, wobei die Matrix von dem Parameter sowie von einem Frequenzoffset zwischen dem Träger des OFDM-Signals und der Frequenz abhängt, die für seine Demodulierung im Basisband verwendet wird, dass man für jeden möglichen Wert des Parameters eine Mehrzahl von möglichen Werten des Frequenzoffsets testet, und dass man den Wert einer Zielfunktion

$$J(\overline{\theta}) = \frac{\left\| \mathbf{H}_{\overline{\theta}}^H \mathbf{y} \right\|^2}{\left\| \mathbf{H}_{\overline{\theta}} \mathbf{H}_{\overline{\theta}}^H \right\|_F}$$ berechnet, wobei $\|\cdot\|$ die euklidische Norm ist und $\|\cdot\|_F$ die Frobenius-Norm ist, und dass man

als Abschätzung $\overline{\theta}$ des Parameters und als Abschätzung des Frequenzoffsets das Paar der möglichen Werte des Parameters und des Offsets auswählt, das das Maximum der Zielfunktion realisiert.

10. Verfahren zur Abschätzung nach Anspruch 9, **dadurch gekennzeichnet, dass** der Parameter kennzeichnend ist für die Nutzlänge der OFDM-Symbole.

11. Verfahren zur Abschätzung nach Anspruch 9, **dadurch gekennzeichnet, dass** es eine Gruppe von Parametern des OFDM-Signals gemeinsam abschätzt, wobei das Maximum der Zielfunktion für eine Gruppe von jeweiligen möglichen Werten dieser Parameter und einen Wert des Frequenzoffsets gesucht wird, wobei die Gruppe der möglichen Werte der Parameter und des Frequenzoffsets, die das Maximum der Zielfunktion realisiert, die jeweiligen Abschätzwerte dieser Parameter und dieses Offsets ergibt.

12. Verfahren zur Abschätzung nach Anspruch 11, **dadurch gekennzeichnet, dass** die Gruppe von Parametern gebildet wird durch die Anzahl **N** von Unterträgern des OFDM-Multiplex, die Nutzlänge $\mathbf{NT}_C$ und die Präfixdauer $\mathbf{DT}_C$ der OFDM-Symbole.

$T_{prefix} = DT_c$

$T_{utile} = NT_c$

**Fig. 1**

210

$T_c$ ↓

220

S/P

D

N

230

FFT

N

240

P/S

$\hat{a}_{k,n}$

**Fig. 2**

**Fig. 3**

BB — 310

$T_e \downarrow$ — 320

$\Pi\left(T_0\right)$ — 330

$\mathbf{y} = \left(y(0), y(1),..., y(M-1)\right)^T$ — 340

$init(\bar{\boldsymbol{\theta}})$
$J_{max} = 0$ — 350

$\mathbf{H}_{\bar{\boldsymbol{\theta}}} \qquad \left\|\mathbf{H}_{\bar{\boldsymbol{\theta}}}\mathbf{H}_{\bar{\boldsymbol{\theta}}}^{\mathbf{H}}\right\|_F$ — 360

$\left\|\mathbf{H}_{\bar{\boldsymbol{\theta}}}\mathbf{y}\right\|^2$ — 363

$J = \dfrac{\left\|\mathbf{H}_{\bar{\boldsymbol{\theta}}}\mathbf{y}\right\|^2}{\left\|\mathbf{H}_{\bar{\boldsymbol{\theta}}}\mathbf{H}_{\bar{\boldsymbol{\theta}}}^{\mathbf{H}}\right\|_F}$ — 365

$J > J_{max}$ ? — 370

Y → $J_{max} = J$
$store(\bar{\boldsymbol{\theta}})$ — 375

N

385 — $vary(\bar{\boldsymbol{\theta}})$ ← N — $\bar{\boldsymbol{\theta}} = end$ ? — 380

Y

$retrieve(\hat{\boldsymbol{\theta}})$ — 390

**Fig. 4**

$$BB \qquad 410$$

$$T_e \downarrow \qquad 420$$

$$\Pi\left(T_0\right) \qquad 430$$

$$\mathbf{y} = \left(y(0), y(1), ..., y(M-1)\right)^T \qquad 440$$

$$init(\bar{\boldsymbol{\theta}}) \qquad J_{\max} = 0 \qquad 450$$

$$\tau_e = 0 \qquad 455$$

$$\mathbf{H}_{\tilde{\boldsymbol{\theta}}} \qquad \left\|\mathbf{H}_{\tilde{\boldsymbol{\theta}}}\mathbf{H}_{\tilde{\boldsymbol{\theta}}}^{\mathbf{H}}\right\|_F \qquad 460$$

$$\left\|\mathbf{H}_{\tilde{\boldsymbol{\theta}}}\mathbf{y}\right\|^2 \qquad 463$$

$$J = \frac{\left\|\mathbf{H}_{\tilde{\boldsymbol{\theta}}}\mathbf{y}\right\|^2}{\left\|\mathbf{H}_{\tilde{\boldsymbol{\theta}}}\mathbf{H}_{\tilde{\boldsymbol{\theta}}}^{\mathbf{H}}\right\|_F} \qquad 465$$

$$470 \qquad 475$$

$$J > J_{\max}? \qquad \text{Y} \qquad J_{\max} = J \qquad store(\bar{\boldsymbol{\theta}}, \tau_e)$$

$$\text{N}$$

$$479$$

$$inc(\tau_e) \qquad \text{N} \qquad \tau_e = \tau_{\max} \qquad 477$$

$$485 \qquad \text{Y}$$

$$vary(\bar{\boldsymbol{\theta}}) \qquad \text{N} \qquad \bar{\boldsymbol{\theta}} = end? \qquad 480$$

$$\text{Y}$$

$$retrieve(\hat{\boldsymbol{\theta}}, \hat{\tau}_e) \qquad 490$$

BB — 510

$T_e \downarrow$ — 520

$\Pi\left(T_0\right)$ — 530

$\mathbf{y} = \left(y(0), y(1), ..., y(M-1)\right)^T$ — 540

$init(\overline{\boldsymbol{\theta}})$   $J_{\max} = 0$ — 550

$\delta f = -\delta f_{\max}$ — 555

$\mathbf{H}_{\tilde{\boldsymbol{\theta}}}$   $\left\|\mathbf{H}_{\tilde{\boldsymbol{\theta}}}\mathbf{H}_{\tilde{\boldsymbol{\theta}}}^{\mathbf{H}}\right\|_F$ — 560

$\left\|\mathbf{H}_{\tilde{\boldsymbol{\theta}}}\mathbf{y}\right\|^2$ — 563

$J = \dfrac{\left\|\mathbf{H}_{\tilde{\boldsymbol{\theta}}}\mathbf{y}\right\|^2}{\left\|\mathbf{H}_{\tilde{\boldsymbol{\theta}}}\mathbf{H}_{\tilde{\boldsymbol{\theta}}}^{\mathbf{H}}\right\|_F}$ — 565

470   475

$J > J_{\max}$ ?   Y

$J_{\max} = J$
$store(\overline{\boldsymbol{\theta}}, \delta f)$

N

479

$inc(\delta f)$   N   $\delta f = \delta f_{\max}$ — 477

485   Y

$vary(\overline{\boldsymbol{\theta}})$   N   $\overline{\boldsymbol{\theta}} = end$? — 480

Y

$retrieve(\hat{\boldsymbol{\theta}}, \widehat{\delta f})$ — 490

**Fig. 5**

19

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. LIU et al.** A blind time-parameters estimation scheme for OFDM in multipath channel. *Proc. 2005 Int'l Conference on Information, Communications and Signal Processing,* 23 Septembre 2005, vol. 1, 242-247